# DEMANDE DE BREVET EUROPEEN

(11) **EP 1 784 016 A1**
(43) Date de publication de la demande: **09.05.2007**
(21) Numéro de dépôt: 05110316.6
(22) Date de dépôt: 03.11.2005
(51) Int. Cl.: H04N 7/16

(54) **Méthode de sécurisation de données échangées entre un dispositif de traitement multimédia et un module de sécurité**

(71) Demandeur: Nagravision S.A., 1033 Cheseaux-sur-Lausanne (CH)
(72) Inventeur: Moreillon, Guy, 1042 Bioley-Orjulaz (CH); Fischer, Nicolas, 1290 Versoix (CH); Keychenko, Nikolai, 1005 Lausanne (CH); Wenger, Joel, 1295 Mies (CH)
(74) Mandataire: Wenger, Joel-Théophile

(57) **Abrégé**

Le but de la présente invention est de proposer une méthode de création d'un canal sécurisé et authentifié entre un dispositif de traitement multimédia et un module de sécurité pouvant être partagé entre plusieurs entités, les données transmises à une entité ne compromettant pas les autres entités.

Ce but est atteint par une méthode de sécurisation de données échangées entre un dispositif de traitement multimédia et un module de sécurité administré par un centre de gestion, le dispositif de traitement multimédia comprenant une clé personnelle cette méthode comprenant les étapes suivantes:
- détermination d'un identifiant propre à une entité représentant un groupe de dispositifs de traitement multimédia,
- calcul d'une clé de sécurité formée par une opération à sens unique basée sur la clé personnelle du dispositif de traitement multimédia et de l'identifiant de l'entité,
- transmission de cette clé de sécurité au module de sécurité lié à ladite entité,
- formation d'une clé de sécurité entre le dispositif de traitement multimédia et le module de sécurité, par la réception de l'identifiant de l'entité par le dispositif de traitement multimédia,
- calcul par le dispositif de traitement multimédia de la clé de sécurité par une opération à sens unique basée sur la clé personnelle dudit dispositif de traitement multimédia et de l'identifiant de l'entité,
- utilisation de cette clé pour sécuriser les données échangées entre le dispositif de traitement multimédia et le module de sécurité.

## Description

### Introduction

La présente invention concerne le domaine des décodeurs pour télévision à péage, en particulier les décodeurs disposant d'un module de sécurité pour assurer les fonctions d'autorisation.

### Etat de la technique

Un décodeur de télévision à péage comprend schématiquement un récepteur capable de recevoir et mettre en forme des signaux de diverses sources tels que satellite, câble, réseau IP; une unité de filtrage capable d'extraire un ou plusieurs flux de données parmi la multitude des flux possibles; une unité centrale en charge de gérer l'ensemble et d'assurer l'interface utilisateur; un modulateur pour transmettre les signaux en clair vers un organe de visualisation; ainsi qu'un module de déchiffrement et de décompression qui reçoit le flux de données encryptées provenant de l'unité de filtrage et transmet les données en clair au démodulateur, ce module ayant la tâche de déchiffrer le flux de données et de décompresser lesdites données selon un format standard tel que DVB.

Il est à noter que physiquement, le module de déchiffrement et de décompression est placé sur le même support que le modulateur de telle sorte que les données en clair ne soient pas accessibles après leur déchiffrement. Un tel décodeur est relié à une unité de sécurité qui peut prendre plusieurs formes telles qu'une carte à puce, une carte SIM, un module électronique de forme quelconque dont la liaison avec le décodeur peut être soit avec ou sans contacts.

Un décodeur peut prendre de nombreuses formes telles que le bien connu appareil apposé à côté du téléviseur mais également peut être sous la forme de dispositifs portables, tels que Palm, téléphone 3^{ème} génération ou iPod™.

Pour assurer la sécurité des échanges entre le module de sécurité et le décodeur, les données transmises par le module de sécurité sont encryptées par une clé propre à chaque décodeur. Une telle solution est décrite dans le document WO99/57901A1. Les clés nécessaires au déchiffrement d'un contenu audio ou vidéo sont donc extraites de messages de sécurité que seul peut décrypter ce module après vérification des droits.

Ces clés ou mots de contrôle sont encryptés avec une clé propre au couple module de sécurité / décodeur et transmis au décodeur.

Afin de renforcer la sécurité notamment dans le décodeur, les mots de contrôle ne sont décryptés que dans le module de déchiffrement. Chacun de ces modules dispose d'une clé propre qui est communiquée au module de sécurité par des moyens sécurisés administrés par un centre de gestion. Un tel exemple est également illustré dans le document WO2004/010698 dans lequel une clé de déchiffrement est directement localisée dans le module de déchiffrement du flux, cette clé permettant de décrypter les clés envoyées par un module de sécurité.

Les procédures d'établissement d'une clé d'encryption du canal entre le décodeur et le module de sécurité sont basées sur la connaissance d'un secret commun (voir document WO03107585). Ainsi, si un décodeur doit pouvoir recevoir des données de plusieurs modules de sécurité, chaque module doit disposer du secret initial pour créer ce canal sécurisé.

Le besoin d'interactivité étant grandissant, il est devenu nécessaire d'ouvrir l'utilisation d'un même décodeur à plusieurs opérateurs ou plusieurs entités, une entité constituant un groupe de décodeurs liés par un même dénominateur commun (régional, type de contrat, version du matériel etc.). Ceci force bien sûr la dissémination de la clé secrète du module de déchiffrement parmi les différentes entités. Si une des entités est l'objet d'une fuite, on imagine le tort que cela crée non seulement pour cette entité, mais pour toutes les entités.

### Brève description de l'invention

Le but de la présente invention est de proposer une méthode de création d'un canal sécurisé et authentifié entre un dispositif de traitement multimédia et un module de sécurité pouvant être partagé entre plusieurs entités, les données transmises à une entité ne compromettant pas les autres entités.

Ce but est atteint par une méthode de sécurisation de données échangées entre un dispositif de traitement multimédia et un module de sécurité administré par un centre de gestion, le dispositif de traitement multimédia comprenant une clé personnelle cette méthode comprenant les étapes suivantes:
- détermination d'un identifiant propre à une entité représentant un groupe de dispositifs de traitement multimédia,
- calcul d'une clé de sécurité formée par une opération à sens unique basée sur la clé personnelle du dispositif de traitement multimédia et de l'identifiant de l'entité,
- transmission de cette clé de sécurité au module de sécurité lié à ladite entité,
- formation d'une clé de sécurité entre le dispositif de traitement multimédia et le module de sécurité, par la réception de l'identifiant de l'entité par le dispositif de traitement multimédia,
- calcul par le dispositif de traitement multimédia de la clé de sécurité par une opération à sens unique basée sur la clé personnelle dudit dispositif de traitement multimédia et de l'identifiant de l'entité,
- utilisation de cette clé pour sécuriser les données échangées entre le dispositif de traitement multimédia et le module de sécurité.

Ainsi, une clé de sécurité différente est générée pour chaque groupe de module de sécurité permettant le dialogue avec le même dispositif de traitement multimédia.

Ceci a l'avantage qu'aucune entité ne dispose de la clé personnelle du dispositif de traitement multimédia tout en pouvant échanger des données sécurisées avec ledit module de sécurité.

La fonction à sens unique peut être de différents types tels que par exemple une fonction de hachage (SHA, MD2, MD5, HMAC), une fonction de hachage avec clé (HMAC) ou une fonction d'encryption, l'identifiant d'opérateur étant encrypté par la clé personnelle du dispositif de traitement multimédia.

### Brève description de la figure

L'invention sera mieux comprise grâce à la description détaillée qui va suivre et qui se réfère au dessin annexé qui est donné à titre d'exemple nullement limitatif, et représente un dispositif de traitement multimédia pouvant être connecté à deux modules de sécurité.

### Description détaillée de l'invention

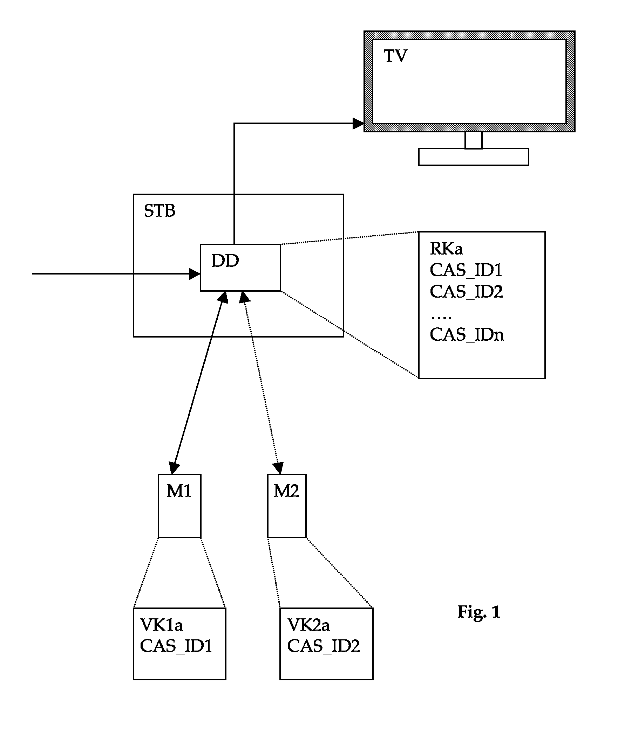

La description détaillée se réfère à la figure 1. Le cadre de cette invention est la possibilité de sécuriser un canal de communication tout en assurant la gestion par un centre de gestion. Ce centre de gestion dispose de la liste des clés personnelles relatives aux dispositifs de traitement multimédia. Pour la suite de l'exposé, nous parlerons d'un décodeur STB tel qu'illustré sur la figure 1.

Ce décodeur STB comprend un module de déchiffrement et de décompression DD qui reçoit les données multimédia sous forme encryptées et qui les traite afin de les rendre utilisable à un organe de visualisation telle qu'une télévision TV.

Pour effectuer une décryption des données, il est nécessaire de disposer des clés de décryption qui sont fournies par un module de sécurité M. Le canal entre le module de sécurité M et le module DD est encrypté par une clé de sécurité afin d'éviter qu'une clé de décryption puisse être utilisée par plus d'un décodeur. C'est la manière de générer cette clé qui est ici décrite.

Un centre de gestion est sollicité pour l'établissement des paramètres de sécurité entre une entité donnée et un décodeur. La première opération est d'attribuer à cette entité un identifiant CAS_ID qui lui et propre. La seconde opération est d'identifier un décodeur et par-là même, connaître sa clé personnelle RK.

Sur la base de ces deux informations, le centre de gestion va calculer une clé de sécurité VK par une fonction à sens unique utilisant ces deux informations. La solution la plus simple est une fonction de hachage (Hash) sur le bloc formé de l'identifiant d'opérateur et de la clé personnelle (HMAC). Ce résultat constitue la clé de sécurité VK et sa connaissance par l'opérateur ne lui permet pas de retrouver la clé personnelle RK.

Cette clé de sécurité VK est alors chargée dans le module de sécurité M, soit à l'initialisation, soit lors d'une phase de mise en service par l'envoi de messages de gestion par l'entité, via les données multimédia.

Pour qu'un décodeur puisse générer la clé de sécurité VK, il doit connaître l'identifiant de l'entité CAS_ID. Cette information peut être obtenue de plusieurs manières, par exemple par l'extraction de données qui sont dans le flux de données multimédia. Dans le cas où ce décodeur est destiné à recevoir un flux de données d'une seule source, il est possible de placer dans ce flux l'information de l'identifiant de l'entité.

Selon un autre mode de réalisation, c'est le module de sécurité M qui va communiquer cette information au module de déchiffrement et de décompression DD. C'est ce second mode qui a été choisi pour illustrer la présente demande sans exclure la fonctionnalité selon le premier mode.

Lorsqu'un module de sécurité souhaite dialoguer avec un décodeur STB, par exemple le module M1, et en particulier avec son module de déchiffrement et de décompression DD, ce module envoie son identifiant d'entité CAS_ID1 au module de déchiffrement et de décompression DD. Ce dernier va calculer la même fonction à sens unique qu'effectuée par le centre de gestion et obtenir la clé de sécurité VK1a. Cette clé est utilisée pour décrypter les données reçues du module de sécurité M1. Si ce module ne dispose pas de cette clé pour encrypter les informations, les données obtenues du coté du module de déchiffrement et de décompression DD seront incompréhensibles. Pour éviter toute détérioration du matériel, il est possible d'ajouter une phase de vérification dès lors que la clé de sécurité est déterminée par le module de déchiffrement et de décompression DD. Ainsi, il est spécifié que le prochain message produit par le module de sécurité est une valeur de référence (par exemple 01010101B) encrypté par la clé de sécurité VK1a. Si cette valeur n'est pas reçue par le module de déchiffrement et de décompression DD, tout traitement est interrompu. Dans un mode plus élaboré, le module de déchiffrement et de décompression DD génère un nombre aléatoire N et l'encrypte avec la clé de sécurité et envoie ce cryptogramme au module de sécurité. Ce dernier décrypte le cryptogramme pour en obtenir le nombre aléatoire N. Il applique une fonction convenue sur le nombre aléatoire (une addition, soustraction, XOR etc.) pour obtenir N'. Le module de sécurité encrypte N' avec la clé de sécurité et envoie ce cryptogramme au module de déchiffrement et de décompression DD. Ce dernier décrypte le cryptogramme et vérifie la relation entre le nombre aléatoire généré N et celui reçu N'. Si la relation est celle qui a été convenue, ceci signifie que les deux parties disposent de la même clé.

Selon un mode de réalisation, l'identifiant de l'entité peut être étendu à un identifiant de module de sécurité. En effet, le centre de gestion connaissant le décodeur concerné donc son module de déchiffrement et de décompression DD et le module de sécurité qui est destiné à interagir avec ce décodeur peut générer une clé de sécurité qui serait une fonction d'un identifiant de module de sécurité et de la clé personnelle du module de déchiffrement et de décompression DD. Cette fonction crée un appariement entre le module de sécurité M1 et le module de déchiffrement et de décompression DD.

Selon une variante de cette réalisation, l'identifiant de module de sécurité est formé de deux parties, soit d'un identifiant d'opérateur et d'un identifiant propre à ce module dans la classification de l'entité.

Cette manière de coder l'identifiant sera utile pour les modes de réalisation impliquant la vérification de l'identifiant dans une liste, seule la partie de l'identifiant relative à l'entité sera vérifiée par le module de déchiffrement et de décompression DD.

Selon une variante de réalisation, le module de déchiffrement et de décompression DD comprend des moyens de vérification de la conformité du module de sécurité M qui lui est connecté. A cet effet, le module de déchiffrement et de décompression DD comprend une liste des identifiants admis à la création de la clé de sécurité telle qu'illustré dans la figure 1 par la liste des CAS_ID. Dans ce cas elle est dite positive car comprenant les CAD_ID valides ou elle peut être négative car comprenant la liste des CAD_ID interdits.

Il existe de nombreuses manières de gérer cette liste et nous allons expliciter certaines de ces manières.

### Liste à fusible

Dans un premier temps, chaque module de déchiffrement et de décompression DD comprend une liste de par exemple 100 identifiants CAD_ID1... CAS_ID100. Le centre de gestion peut insérer dans le flux de données multimédia des commandes de désactivation d'un ou plusieurs identifiants ce qui va avoir pour conséquence d'effacer définitivement un ou plusieurs identifiants. Ceci aura pour effet que ces identifiants ne seront plus admis à créer une clé de sécurité avec un module de sécurité.

Ces commandes de désactivation sont de préférence encryptées ou signées par une clé qui serait commune à tous les modules de déchiffrement et de décompression DD.

### Liste évolutive

Le flux de données multimédia comprend des informations permettant de former cette liste. A l'origine, aucun identifiant n'est admis (éventuellement un identifiant par défaut CAD_ID1) et des commandes permettent de programmer les identifiants autorisés ou effacer les identifiants révoqués. Le résultat de ces commandes est stocké dans une mémoire non volatile. De même que précédemment, ces commandes sont de préférence encryptées ou signées par une clé commune à tous les modules de déchiffrement et de décompression DD.

Selon un mode de réalisation, le module de déchiffrement et de décompression DD comprend une mémoire volatile qui est vide lors de chaque enclenchement. Ainsi, cette mémoire est chargée avec les identifiants reçus dans le flux de données multimédia courant. Ceci permet de relier un flux de données multimédia à un ensemble d'identifiants d'entités donné. Ces identifiants sont placés dans une table et font partie du flux d'information SI. Ainsi il est possible de faire évoluer cette table durant une même session de diffusion et avec elle, la liste des entités autorisées. Le module de déchiffrement et de décompression DD mémorise l'identifiant de l'entité avec lequel il a créé une clé de sécurité et lorsque la table des identifiants change, il vérifie que l'identifiant courant est toujours compris dans la nouvelle table. Dans la négative, il stoppe la réception des données transmises par ce module de sécurité et demande une nouvelle phase d'initialisation de la clé de sécurité.

## Revendications

1. Méthode de sécurisation de données échangées entre un dispositif de traitement multimédia et un module de sécurité administré par un centre de gestion, le dispositif de traitement multimédia recevant des données multimédia encryptées et étant en charge de décrypter et convertir ces données pour les rendre exploitable, ledit dispositif comprenant une clé personnelle cette méthode comprenant les étapes suivantes:
- obtention par le dispositif de traitement multimédia d'un identifiant propre à une entité représentant un groupe de dispositifs de traitement multimédia,
- calcul d'une clé de sécurité formée par une opération à sens unique basée sur la clé personnelle du dispositif de traitement multimédia et de l'identifiant de l'entité,
- transmission de cette clé de sécurité au module de sécurité lié à ladite entité,
- formation d'une clé de sécurité entre le dispositif de traitement multimédia et le module de sécurité, par la transmission par le module de sécurité de l'identifiant de l'entité au dispositif de traitement multimédia,
- calcul par le dispositif de traitement multimédia de la clé de sécurité par une opération à sens unique basée sur la clé personnelle dudit dispositif de traitement multimédia et de l'identifiant de l'entité,
- utilisation de cette clé de sécurité pour sécuriser les données échangées entre le dispositif de traitement multimédia et le module de sécurité.

2. Méthode selon la revendication 1, **caractérisée en ce que** l'obtention de l'identifiant de l'entité est obtenu par la transmission dudit identifiant par le module de sécurité.

3. Méthode selon la revendication 1, **caractérisée en ce que** l'obtention de l'identifiant de l'entité est obtenu par l'extraction dudit identifiant du flux de données reçu par le dispositif de traitement multimédia.

4. Méthode selon les revendications 1 à 3, **caractérisée en ce que** le dispositif de traitement multimédia (STB) comprend un module de déchiffrement et de décompression (DD) dans lequel est initialisé la clé personnelle.

5. Méthode selon les revendications 4, **caractérisée en ce qu'**elle comprend une étape de vérification de l'identité de la clé de sécurité dans le module de sécurité (M) et dans le module de déchiffrement et de décompression (DD) par l'encryption avec ladite clé d'un message contenant au moins une partie prédéfinie par le module de sécurité (M), et vérification de cette partie prédéfinie après décryption par le module de déchiffrement et de décompression (DD).

6. Méthode selon l'une des revendications 1 à 5, **caractérisée en ce que** l'opération à sens unique est une fonction de type hash ou hash MAC.

7. Méthode selon l'une des revendications 1 à 5, **caractérisée en ce que** l'opération à sens unique est une fonction d'encryption de l'identifiant de l'entité par la clé personnelle.

8. Méthode selon l'une des revendications 4 à 7, **caractérisée en ce que** le module de déchiffrement et de décompression (DD) comprend une liste d'identifiants d'entité, ce module de déchiffrement et de décompression (DD) vérifiant la conformité de l'identifiant reçu du module de sécurité par rapport à cette liste.

9. Méthode selon la revendication 8, **caractérisée en ce que** le dispositif de traitement multimédia (STB) reçoit des données multimédia comprenant les données permettant de composer cette liste d'identifiants.

10. Méthode selon les revendications 8 ou 9, **caractérisée en ce que** le module de déchiffrement et de décompression (DD) comprend une clé pour décrypter ou vérifier la signature des données de la liste transmise.

11. Méthode selon l'une des revendications 8 à 9, **caractérisée en ce que** la liste d'identifiants est une liste dite positive c'est-à-dire comprenant les identifiants autorisés à la création de la clé personnelle.

12. Méthode selon l'une des revendications 8 à 9, **caractérisée en ce que** la liste d'identifiants est une liste dite négative c'est-à-dire comprenant les identifiants interdits à la création de la clé personnelle.

13. Module de déchiffrement et de décompression (DD) destiné à être monté dans un dispositif de traitement multimédia et comprenant une unité centrale, un module de déchiffrement, un module de décompression et au moins une clé personnelle, ledit module de déchiffrement et de décompression (DD) étant **caractérisé en ce qu'**il comprend des moyens de génération d'une clé sécurisée calculée à partie d'une fonction à sens unique basée sur la clé personnelle et d'un identifiant reçu par ledit de déchiffrement et de décompression (DD).

14. Module de déchiffrement et de décompression (DD) selon la revendication 13, **caractérisé en ce qu'**il comprend une mémoire contenant une liste d'identifiants et des moyens de vérification de conformité de l'identifiant reçu du module de sécurité par rapport à cette liste.

15. Module de déchiffrement et de décompression (DD) selon la revendication 13 ou 14, **caractérisé en ce qu'**il comprend une clé commune et des moyens pour décrypter ou vérifier la liste des identifiants reçus.
